# EUROPÄISCHE PATENTSCHRIFT

(11) **EP 0 596 201 B1**
(45) Veröffentlichungstag und Bekanntmachung des Hinweises auf die Patenterteilung: **09.10.1996**
(21) Anmeldenummer: 93111433.4
(22) Anmeldetag: 15.07.1993
(51) Int. Cl.: G01M 15/00, G01N 1/22, G01N 1/24

(54) **Verfahren und Vorrichtung zur Gasmengeneinstellung bei Abgasmessungen**
Method and device for gas quantity adjustment during exhaust emission measurements
Méthode et dispositif de réglage d'une quantité de gaz pendant le mesurage de gaz d'échappement

(30) Priorität: 02.11.1992 DE 4237009
(43) Veröffentlichungstag der Anmeldung: 11.05.1994
(73) Patentinhaber: SIEMENS AKTIENGESELLSCHAFT, 80333 München (DE)
(72) Erfinder: Decker, Hans-Josef, D-30952 Ronnenberg (DE); Schwarz, Klaus-Peter, Dipl.-Ing., D-31303 Burgdorf (DE)

(56) Entgegenhaltungen:
- DE-A- 4 017 472
- US-A- 3 603 155
- US-A- 4 586 367

## Beschreibung

Die Erfindung betrifft ein Verfahren nach dem Oberbegriff des Anspruchs 1 sowie eine entsprechende Vorrichtung nach dem Oberbegriff des Anspruchs 6.

Ein derartiges Verfahren bzw. eine derartige Vorrichtung zur Gasmengeneinstellung bei Abgasmessungen ist aus der DE-A-4 017 472 bekannt. Dabei wird mittels einer kritischen Venturidüse eine konstante Gesamtdurchflußmenge eines Verdünnungsluft-Abgasgemischs eingestellt. Bei der Prüfung von Fahrzyklen von Fahrzeugen ändern sich aufgrund von Beschleunigungen, Verzögerungen usw. ständig die Verhältnisse zwischen Abgas und Verdünnungsluft. Die Schadstoffmengen im Abgas, die in Zukunft bei ,,low emission vehicles" zu erwarten sind oder bereits heute erreicht werden können, sind jedoch sehr klein, so daß bei der Untersuchung eines aus dem Verdünnungsluft-Abgasgemisch entnommenen Teilstroms in nachgeschalteten Abgasanalyseanlagen oder Partikelmeßeinrichtungen bei großen Gasdurchflußmengen die Nachweisgrenze erreicht wird. Entsprechend groß sind die auftretenden Meßfehler.

Der Erfindung liegt daher die Aufgabe zugrunde, insbesondere bei "low emission vehicles" eine sichere und genaue Detektierung von Schadstoffkonzentrationen zu ermöglichen.

Gemäß der Erfindung wird die Aufgabe durch das in Anspruch 1 angegebene Verfahren bzw. die in Anspruch 6 angegebene Vorrichtung gelöst.

Vorteilhafte Weiterbildungen der Erfindung sind in den abhängigen Ansprüchen angegeben.

Der wesentliche Vorteil der Erfindung liegt in der Einstellung und Konstanthaltung eines für die Gasanalyse bzw. Partikelmessung jederzeit optimalen Verdünnungsverhältnisses des Abgases.

Zur weiteren Erläuterung der Erfindung wird im folgenden auf die Figuren der Zeichnung Bezug genommen. Im einzelnen zeigen:
- FIG 1: ein Beispiel für die Regelungsstruktur der erfindungs-gemäßen Vorrichtung zur Gasmengeneinstellung mit querschnittsveränderbarer Venturidüse,
- FIG 2: einen Detailschnitt durch die Venturidüse,
- FIG 3: ein Beispiel für die Anordnung der Vorrichtung in einem Prüfstandsmodul und
- FIG 4: eine Kennlinie, die die Abhängigkeit des Volumendurchflusses durch die Düse von der Düsennadelposition angibt.

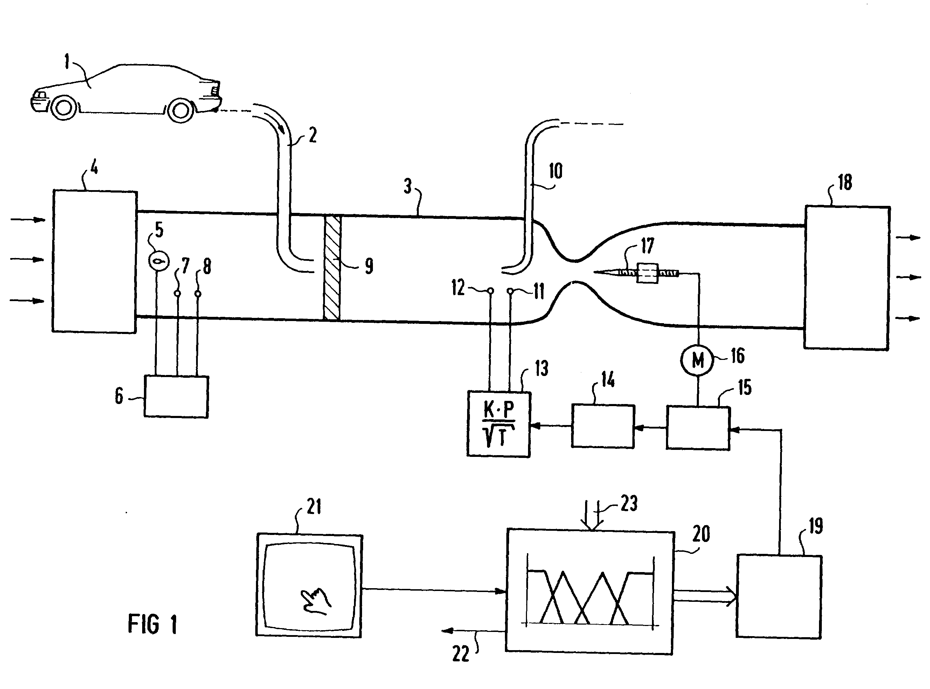

In FIG 1 bezeichnet 1 ein Kraftfahrzeug, dessen Abgas durch eine Zuleitung 2 einer Vorrichtung zur Gasmengeneinstellung zugeführt wird. Die Vorrichtung selbst weist einen rohrförmigen Hauptdurchflußkörper 3 auf, der mit einem Verdünnungsluftfilter 4 verbunden ist. Im Strömungsweg hinter dem Verdünnungsluftfilter 4 befindet sich eine Vortexsonde 5 mit Temperatur- und Druckmeßstellen 8 und 7. Eine Recheneinheit 6 errechnet aus den Werten der Vortexsonde 5 und des Druckes P sowie der Temperatur T die Verdünnungsluftmenge. Im Strömungsweg hinter der Zuleitung 2 für das Abgas befindet sich in dem rohrförmigen Körper 3 ein Mischer 9, z.B. eine Lochscheibe, ein grobmaschiges Sieb o.ä. Ebenso kann aber auch ein Drallmischer verwendet werden.

Die Entnahme eines zu messenden Teilstroms erfolgt durch ein Entnahmerohr 10 in einem strömungsberuhigten Bereich des rohrförmigen Körpers 3, in dem weitere Druck- und Temperaturmeßfühler 12 und 11 angeordnet sind. Diese geben ihre Meßwerte einer Recheneinheit 13 auf, deren Grundalgorithmus angegeben ist. Strömungsmäßig hinter dem Entnahmerohr 10 befindet sich eine Venturidüse mit verstellbarer Düsennadel 17, an die sich ein Turbokompressor, z.B. ein Rootsgeblase 18, anschließt. Hier kann aber auch eine Wasserringgaspumpe oder eine ähnliche Verdrängerpumpe angeordnet sein.

Die Düsennadel 17 ist durch einen Motor 16 verstellbar, dessen Stellung einer Positioniersteuerung 15 aufgegeben wird. Über eine Recheneinheit 14, in der eine Kennlinie für die Beziehung zwischen dem Volumendurchfluß durch die Venturidüse und der Position der Düsennadel 17 gespeichert ist, wird dann mit den Meßwerten der Druck- und Temperatursonden 11 und 12 sowie mit der in der Recheneinheit 6 ermittelten Verdünnungsluftmenge in der Recheneinheit 13 ein Istwert des Verdünnungsverhältnisses 23 des Abgases errechnet und einer Einheit 20 zugeführt. Der Istwert wird entsprechend dem Ausgangspfeil 22 an ein Leitsystem oder einen "touch screen" 21 weitergegeben, der zu Eingabe eines Sollwertes des Verdünnungsverhältnisses dient. So ist entweder eine direkte oder übergeordnete Beobachtung und Berücksichtigung des Istwertes des Verdünnungsverhältnisses und seiner Abweichung vom Sollwert möglich. Die Einheit 20 wirkt über eine Einheit 19, in der eine Stellgrößenkorrektur der Nadelposition vorgenommen wird, auf die Positioniersteuerung 15. Zusätzlich erfolgt bei sprunghaften Gasmengenänderungen eine voreilende Einstellung der zu erwartenden Düsennadelposition durch eine überlagerte Fuzzy-Control-Regelung in der Einheit 20.

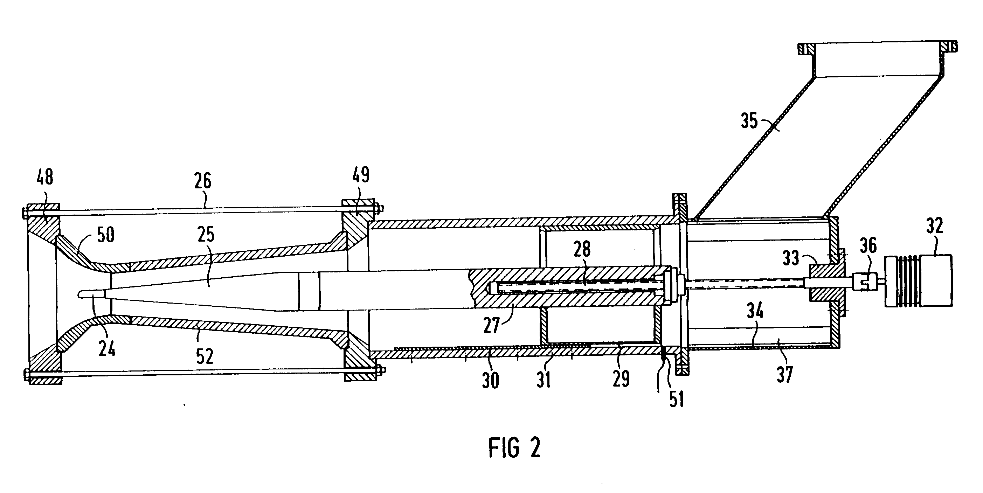

In FIG 2, die den mechanischen Aufbau der querschnittsveränderbaren Venturidüse zeigt, bezeichnet 52 einen Diffusorteil der Venturidüse und 50 ihren Einlaufteil. Die beiden Teile 52 und 50 werden von Klemmflanschen 48 und 49 gehalten. Die Klemmflansche 48 und 49 werden durch Anker 26 arretiert. Im Inneren der Venturidüse aus den Teilen 52 und 50 befindet sich die Düsennadel mit einem vorn abgerundeten, zylindrischen Einlaufabschnitt 24. Ein kegeliger Düsennadelabschnitt 25 schließt sich an eine zylindrische Schubstange 27 an, in die eine Gewindestange 28 eingreift. Als Axialführung und gleichzeitige Verdrehsicherung besitzt die Schubstange 27 einen Führungszylinder oder einen Käfig 29, der durch nicht näher bezeichnete Schrauben über Gleitsteine 30 in einem zylindrischen Außenmantel 31 mit einem vorzugsweise induktiven Referenzpunktschalter 51 geführt wird. Der Antrieb der Spindel 28 zur Positionierung der Düsennadel mit den Teilen 24,25 und 27 erfolgt durch einen Schrittmotor 32, der über eine Kupplung 36 die Spindel 28 bewegt. Die Spindel 28, vorzugsweise eine aus dem Werkzeugmaschinenbereich bekannte spielfreie Kugelspindel mit großer Steigung, weist noch ein spielfrei ausgeführtes Festlager 33 auf, das sicherstellt, daß die Drehung der Spindel 28 durch den Motor 32 zu einer Axialbewegung der Schubstange 27 und nicht zu einer Axialbewegung der Axialspindel 28 führt. Die Ableitung der eingestellten Gasmenge erfolgt durch einen Rohrstutzen 35, der im Bereich von Abstandshalterungen 37 eines zylindrischen Teils 34, das den zylindrischen Außenmantel 31 verlängert, abzweigen kann.

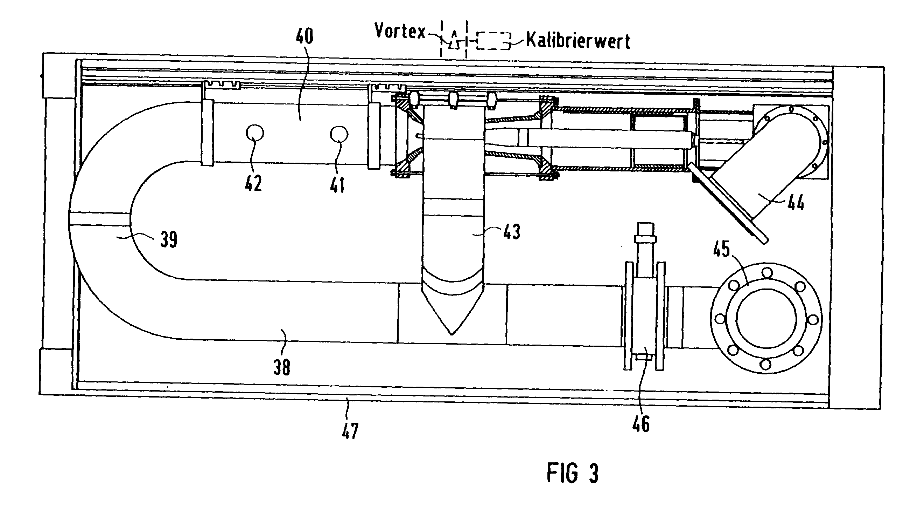

Aus FIG 3 ist eine besonders raumsparende Anordnung der Vorrichtung zur Gasmengeneinstellung in einer Kraftfahrzeug-Abgasanalyseeinrichtung in beispielhaftem Aufbau ersichtlich, die häufig von baulichen Gegebenheiten der Teststände erzwungen wird. Die Raumluftzuführung erfolgt über einen Rohrstutzen 43 und die Abgaszuführung über den Rohrstutzen 45. Der Abgasstutzen 45 ist durch eine gasdicht schließende Klappe 46 absperrbar, um eine Kalibrierung der Venturidüse in den verschiedenen Stellungen der Düsennadel durch eine vor dem Stutzen 43 angeordnete Vortexsonde zu ermöglichen. In einem Einlaufbereich 40 vor der Venturidüse befinden sich Druck- und Temperaturmeßstellen 41 und 42, in die in üblicher Weise entsprechende Meßsonden eingelassen sind. Die Gasmengeneinstellvorrichtung selbst ist in einem gesonderten Rahmen 47 gelagert, wobei die gezeigte Pratzenlagerung an dem Einlaufbereich 40 für eine Dehnungsmöglichkeit der Rohre 38,39 zum Ausgleich der Temperatureinflüsse sorgt. Insgesamt ergibt sich in der Ausführung entsprechend FIG 3 ein Gasmengen-Einstellmodul, das leicht und einfach in bestehende oder neu geplante Prüfstände o.ä. integrierbar ist. Eine darüberhinaus noch vorhandene Heizung bzw. Kühlung ist aus Vereinfachungsgründen nicht mit eingezeichnet.

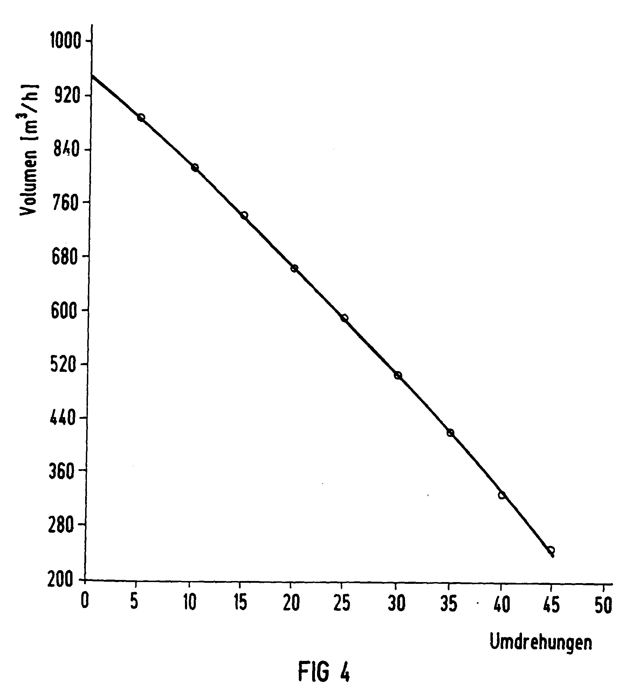

FIG 4 zeigt die Abhängigkeit des Volumendurchflusses von der Düsennadelposition. Wie ersichtlich folgt der Volumendurchfluß der kritischen Düse fast linear der Zahl der Drehungen der Einstellspindel. Der Verlauf der Kurve kann durch ein Polynom zweiter Ordnung wiedergegeben werden, so daß die Recheneinrichtung sehr genau auch Zwischenwerte ermitteln kann. Eine derartige Umsetzung ist aus der Kalibrierung von Sensoren allgemein üblich und bekannt. Bei der Verwendung einer im Werkzeugmaschinenbau üblichen Kugelspindel wurde eine Wiederholgenauigkeit erreicht, die deutlich über den Anforderungen von Tatständen liegt. So ergibt sich für das gesamte Gasmengeneinstellsystem die Möglichkeit einer bisher nicht erreichbar guten Optimierung des Verdünnungsfaktors, was insbesondere für Messungen an "low emission vehicles" wichtig ist. Ein mit der Gasmengeneinstellvorrichtung realisierbarer Abgastest erfüllt alle Voraussetzungen, die z.B. an den Californiatest gestellt werden.

## Patentansprüche

1. Verfahren zur Gasmengeneinstellung bei Abgasmessungen, bei dem Abgas und Verdünnungsluft zu einem Verdünnungsluft-Abgasgemisch gemischt werden, dessen Gesamtdurchflußmenge mittels einer kritischen Düse eingestellt wird und aus dem ein zu untersuchender Teilstrom entnommen wird, **dadurch gekennzeichnet**, daß der Querschnitt der Düse in Abhängigkeit von Änderungen des Abgasvolumens im Sinne einer Konstanthaltung des Verdünnungsverhältnisses des Abgases regelnd verändert wird.

2. Verfahren nach Anspruch 1, dadurch gekennzeichnet, daß zur Querschnittsänderung der Düse die Position einer Düsennadel (17) axial verstellt wird.

3. Verfahren nach Anspruch 2, **dadurch gekennzeichnet**,
- daß die Verdünnungsluft zur Bestimmung der Verdünnungsluftdurchflußmenge durch einen Massendurchflußmesser (5) geleitet wird,
- daß aus der Position der Düsennadel (17) der Volumendurchfluß durch die kritische Düse ermittelt wird und
- daß aus der Verdünnungsluftdurchflußmenge und dem Volumendurchfluß ein Istwert für das Verdünnungsverhältnis ermittelt wird, mit dessen Abweichung von einem Sollwert die Position der Düsennadel (17) zur Regelung des konstanten Verdünnungsverhältnisses verändert wird.

4. Verfahren nach Anspruch 3, **dadurch gekennzeichnet**, daß die Position der Düsennadel (17) in Abhängigkeit von sprunghaften Gasmengenänderungen vorauseilend auf eine zu erwartende Düsennadelposition eingestellt wird.

5. Verfahren nach Anspruch 4, **dadurch gekennzeichnet**, daß die voreilende Einstellung der Position der Düsennadel (17) in einer der Regelung überlagerten Fuzzy-Control-Einheit (20) erfolgt.

6. Vorrichtung zur Gasmengeneinstellung bei Abgasmessungen, bei der Abgas und Verdünnungsluft zu einem VerdunnungsluftAbgasgemisch gemischt werden, dessen Gesamtdurchflußmenge mittels einer kritischen Düse eingestellt wird und aus dem ein zu untersuchender Teilstrom entnommen wird, **dadurch gekennzeichnet**, daß die Düse mit veränderbarem Querschnitt ausgebildet ist und eine Regeleinrichtung vorhanden ist, die im Verwendungsfall den Querschnitt der Düse in Abhängigkeit von Änderungen des Abgasvolumens im Sinne einer Konstanthaltung des Verdünnungsverhältnisses des Abgases regelnd verändert.

7. Vorrichtung nach Anspruch 6, **dadurch gekennzeichnet**, daß die Düse zur Querschnittsveränderung eine axial verschiebbare Düsennadel (17) aufweist.

8. Vorrichtung nach Anspruch 7, **dadurch gekennzeichnet**, daß die Düsennadel (17) einen kegelförmigen Diffusoranpassungsabschnitt (25) und einen vorn gerundeten, zylindrischen Einlaufabschnitt (24) aufweist.

9. Vorrichtung nach Anspruch 7 oder Anspruch 8, **gekennzeichnet durch**:
- einen Massendurchflußmesser (5), durch den die Verdünnungsluft geleitet ist,
- eine nachgeordnete Recheneinheit (6) zur Bestimmung der Verdünnungsluftdurchflußmenge,
- eine Positionssteuerung (15) für die Düsennadel (17) mit daran angeschlossener Einrichtung (14) zur Bestimmung des Volumendurchflusses durch die kritische Düse und
- eine Einheit (13), die für eine Sollwert-Istwert-Regelung der Düsennadelposition einen Istwert für das Verdünnungsverhältnis des Abgases aus der Verdünnungsluftdurchflußmenge und dem Volumendurchfluß bildet.

## Claims

1. Method for gas-quantity adjustment during exhaust gas measurements, wherein exhaust gas and diluent air are mixed to form a mixture of diluent air and exhaust gas, the total flow rate of which mixture is adjusted by means of a critical nozzle and from which a part of the flow that is to be investigated is taken, characterised in that the cross section of the nozzle is varied in a regulating manner as a function of changes in the exhaust gas volume for the purpose of keeping the dilution ratio of the exhaust gas constant.

2. Method according to claim 1, characterised in that the position of a nozzle needle (17) is adjusted axially in order to change the cross section of the nozzle.

3. Method according to claim 2, characterised
- in that the diluent air is passed through a mass flow rate meter (5) in order to determine the diluent-air flow rate;
- in that the volume flow rate through the critical nozzle is ascertained from the position of the nozzle needle (17); and
- in that an actual value for the dilution ratio is ascertained from the diluent-air flow rate and the volume flow rate, the deviation of the actual value for the dilution ratio from a desired value being used to vary the position of the nozzle needle (17) in order to regulate the constant dilution ratio.

4. Method according to claim 3, characterised in that the position of the nozzle needle (17) is adjusted in advance, as a function of abrupt changes in the quantity of gas, to a nozzle needle position which is to be expected.

5. Method according to claim 4, characterised in that the advance adjustment of the position of the nozzle needle (17) is made in a fuzzy-control unit (20) overriding the regulating control.

6. Arrangement for gas-quantity adjustment during exhaust gas measurements, in which exhaust gas and diluent air are mixed to form a mixture of diluent air and exhaust gas, the total flow rate of which mixture is adjusted by means of a critical nozzle and from which a part of the flow that is to be investigated is taken, characterised in that the nozzle is formed with a variable cross section and a control device is provided which in the case of application varies the cross section of the nozzle in a regulating manner as a function of changes in the exhaust gas volume for the purpose of keeping the dilution ratio of the exhaust gas constant.

7. Arrangement according to claim 6, characterised in that the nozzle has an axially displaceable nozzle needle (17) for the purpose of changing the cross section.

8. Arrangement according to claim 7, characterised in that the nozzle needle (17) has a conical diffuser-adaptation section (25) and a cylindrical inlet section (24) which is rounded at the front.

9. Arrangement according to claim 7 or claim 8, characterised by:
- a mass flow rate meter (5) through which the diluent air is passed,
- a downstream computing unit (6) for the purpose of determining the diluent-air flow rate;
- a positioning control (15) for the nozzle needle (17) having a device (14) connected thereto for the purpose of determining the volume flow rate through the critical nozzle; and
- a unit (13) which establishes an actual value for the dilution ratio of the exhaust gas from the diluent-air flow rate and the volume flow rate for variance (desired value-actual value) control of the nozzle needle position.

## Revendications

1. Procédé de réglage de la quantité de gaz lors de mesures de gaz d'échappement, qui consiste à mélanger les gaz d'échappement et de l'air de dilution en un mélange air de dilution-gaz d'échappement, dont le débit global est réglé par une buse critique et duquel on prélève un courant partiel à analyser, caractérisé en ce que l'on modifie en la réglant la section transversale de la buse en fonction des variations du volume de gaz d'échappement afin de maintenir constant le rapport de dilution du gaz d'échappement.

2. Procédé suivant la revendication 1, caractérisé en ce que l'on règle la position axiale d'une aiguille (17) de buse pour modifier la section transversale.

3. Procédé suivant la revendication 2, caractérisé en ce que
- on envoie, pour la détermination du débit d'air de dilution, l'air de dilution dans un débitmètre (5) massique,
- on détermine le débit volumique dans la buse critique à partir de la position de l'aiguille (17) de buse,
- on détermine une valeur réelle du rapport de dilution à partir du débit d'air de dilution et du débit volumique, l'écart de cette valeur réelle par rapport à une valeur de consigne servant de base pour modifier la position de l'aiguille (17) de buse en vue de régler le rapport de dilution constant.

4. Procédé suivant la revendication 3, caractérisé en ce que la position de l'aiguille (17) de buse est réglée, en fonction de variations discontinues de quantité de gaz, en étant en avance par rapport à une position d'aiguille de buse à laquelle on s'attend.

5. Procédé suivant la revendication 4, caractérisé en ce que le réglage en avance de la position de l'aiguille (17) de buse a lieu dans une unité de commande à logique floue superposée au réglage.

6. Dispositif de réglage d'une quantité de gaz lors de la mesure de gaz d'échappement, dans lequel le gaz d'échappement et l'air de dilution sont mélangés pour former un mélange gaz d'échappement-air de dilution, dont le débit global est réglé au moyen d'une buse critique et dont on prélève un courant partiel à analyser, caractérisé en ce que la buse est constituée de manière à avoir une section transversale pouvant être modifiée et il est prévu un dispositif de réglage, qui, lorsqu'il est utilisé, modifie, en la réglant, la section transversale de la buse en fonction des variations du volume gazeux afin de maintenir constant le rapport de dilution du gaz d'échappement.

7. Dispositif suivant la revendication 6, caractérisé en ce que la buse comporte une aiguille (17) de buse pouvant coulisser axialement pour modifier sa section transversale.

8. Dispositif suivant la revendication 7, caractérisé en ce que l'aiguille (17) de buse comporte un tronçon (25) d'adaptation de diffuseur en forme de cône et un tronçon (24) d'admission cylindrique arrondi à l'avant.

9. Dispositif suivant la revendication 7 ou 8, caractérisé par
- un débitmètre (5) massique dans lequel l'air de dilution est envoyé,
- une unité (6) de calcul disposée en aval pour déterminer le débit d'air de dilution,
- un dispositif (15) de commande de position de l'aiguille (17) de buse avec un dispositif (14), auquel il est relié, pour déterminer le débit volumique dans la buse critique et
- une unité (13), qui forme une valeur réelle du rapport de dilution du gaz d'échappement à partir de la valeur du débit d'air de dilution et du débit volumique pour un réglage par valeur réelle et valeur de consigne de la position d'aiguille de buse.
